# EUROPÄISCHE PATENTANMELDUNG

(11) **EP 3 260 502 A1**
(43) Veröffentlichungstag der Anmeldung: **27.12.2017**
(21) Anmeldenummer: 16001393.4
(22) Anmeldetag: 21.06.2016
(51) Int. Cl.: C09C 1/36, C09C 3/06, C09C 3/08, C09C 1/00, C09C 1/02, C09C 1/04, C09C 1/06, C09C 1/16, C09C 1/30

(54) **LEICHT DISPERGIERBARES PIGMENT**

(71) Anmelder: KRONOS INTERNATIONAL, INC., 51373 Leverkusen (DE)
(72) Erfinder: Kolmer Anderl, Nicole, 40764 Langenfeld (DE); Sandrock, Martin, 45279 Essen (DE)

(57) **Zusammenfassung**

Die Erfindung richtet sich auf ein leicht dispergierbares Pigment für Zusammensetzungen insbesondere wasserbasierte Beschichtungszusammensetzungen, das mit einem Additiv auf der Basis eines Bisphosphonats oberflächenfunktionalisiert ist. Ferner betrifft die Efindung ein Verfahren zur Herstellung eines solchen Pigments, auf Beschichtungszusammensetzungen, die die hierin offenbarten Pigmente enthalten, sowie die Verwendung des Pigments zur Farbgebung in Zusammensetzungen.

## Beschreibung

### Gebiet der Erfindung

Die vorliegende Erfindung liegt auf dem Gebiet der Pigmenttechnologie. Die Erfindung richtet sich auf ein leicht dispergierbares Pigment für Zusammensetzungen insbesondere wasserbasierte Beschichtungszusammensetzungen, das mit einem Additiv auf der Basis eines Bisphosphonats oberflächenfunktionalisiert ist. Ferner betrifft die Erfindung ein Verfahren zur Herstellung eines solchen Pigments, auf Beschichtungszusammensetzungen, die die hierin offenbarten Pigmente enthalten, sowie die Verwendung des Pigments zur Farbgebung in Zusammensetzungen.

### Technologischer Hintergrund der Erfindung

Die Dispergierung von Pigmenten stellt einen zentralen Schritt bei der Herstellung von Farben und Lacken (Beschichtungen) dar, da der Dispergierungsgrad der Pigmente wesentliche Eigenschaften dieser Beschichtungen wie Glanz, Deckkraft, Aufhellvermögen bzw. Färbekraft beeinflusst.

Im Stand der Technik etablierte, für wässrige Bindemittelzusammensetzungen geeignete Pigmente, wie Titandioxid in wässriger Lösung, werden durch einfaches Rühren unzureichend dispergiert und sedimentieren. Daher ist bei der Herstellung von Farb- und Lackzusammensetzungen ein Dispergierungsschritt erforderlich, bei dem die Pigmente mittels Hochleistungsrührscheibengeräten, wie Dissolver, oder Mühlen, wie Perlmühlen, in diese Zusammensetzungen eingearbeitet werden und somit ein ausreichender Dispergierungsgrad erreicht werden kann.

Um auf einen Dispergierungsschritt zu verzichten und um das Pigment direkt in Farb- und Lackzusammensetzungen einzuarbeiten, sind im Stand der Technik mehrere Ansätze bekannt. DE 10 2007 023 913 A1 offenbart Pigmentzubereitungen von pastöser oder gelförmiger Konsistenz, die in Abhängigkeit der eingesetzten Flüssigkeit und des Pigmenttyps einen Pigmentgehalt von 15 bis 70 Gew.-% aufweisen. Dokument DE 10 2008 045 121 A1 beschreibt Pigment-Mikrogranulate, die bis zu 10 Gew.-% eines Filterhitfsmittels enthalten und bei Kontakt mit Wasser in sehr kurzer Zeit ohne mechanische Einwirkung zerfallen. Des Weiteren lehrt EP 1 474 484 B1 Pigmentgranulate als Stir-in Pigmente, die 10 bis 40 Gew.-% oberflächenaktive nichtionische Additive enthalten. Jedoch sind solche herkömmlichen Pigmente aufgrund ihrer hohen Additiv-Gehalte nachteilig, da der hohe Gehalt zu Inkompatibilitäten mit Beschichtungszusammensetzungen führen kann und die Einsetzbarkeit des Pigments somit erheblich eingeschränkt ist.

Somit besteht das Bedürfnis nach einem Pigment, das ohne Einschränkung in verschiedenste Farb- und Lackzusammensetzungen unter Verzicht eines intensiven Dispergierungsschritts eingearbeitet werden kann.

### Aufgabenstellung und Kurzbeschreibung der Erfindung

Der Erfindung liegt die technische Aufgabe zugrunde, ein leicht dispergierbares Pigment bereitzustellen, mit welchem zumindest ein Teil der Nachteile der Pigmente des Stands der Technik überwunden werden kann.

Die technische Aufgabe wird gelöst durch ein leicht dispergierbares Pigment, welches mit 0,1 bis 10 Gew.-%, bevorzugt 3 bis 8 Gew.-% eines Additivs auf Basis eines Bisphosphonats oder eines Salzes davon oberflächenfunktionalisiert ist bezogen auf das Gewicht des nicht-oberflächenfunktionalisierten Pigments. Das erfindungsgemäße Pigment ist vielseitig einsetzbar und kann universell in verschiedenste Farb- und Lackzusammensetzungen mit gänzlich verschiedenen Anforderungen und Eigenschaften eingearbeitet werden. Des Weiteren kann auf einen intensiven Dispergierungsschritt verzichtet werden. Das Pigment weist darüber hinaus hervorragenden Glanz, Deckkraft sowie Aufhellvermögen bzw. Färbekraft auf.

Daher richtet sich in einem ersten Aspekt die Erfindung auf ein leicht dispergierbares Pigment, welches dadurch gekennzeichnet ist, dass es mit 0,1 bis 10 Gew.-%, bevorzugt 3 bis 8 Gew.-% eines Additivs auf Basis eines Bisphosphonats oder eines Salzes davon bezogen auf das Gewicht des nicht-oberflächenfunktionialisierten Pigments oberflächenfunktionalisiert ist.

In einem weiteren Aspekt betrifft die Erfindung ein Verfahren zur Herstellung eines leicht dispergierbaren Pigments, welches dadurch gekennzeichnet ist, dass das Verfahren die Oberflächenfunktionalisierung eines Pigments mit 0,1 bis 10 Gew.-%, bevorzugt 3 bis 8 Gew.-% eines Additivs auf Basis eines Bisphosphonats oder eines Salzes davon bezogen auf das Gewicht des nicht-oberflächenfunktionialisierten Pigments umfasst.

In einem anderen Aspekt betrifft die Erfindung ein Beschichtungssystem, bevorzugt ein wässriges Beschichtungssystem, welches dadurch gekennzeichnet ist, dass das Beschichtungssystem mindestens ein leicht dispergierbares Pigment nach der Erfindung umfasst.

Schließlich richtet sich die Erfindung in einem anderen Aspekt auf die Verwendung des hierin beschriebenen Pigments zur Farbgebung von Beschichtungszusammensetzungen, die auf polaren Lösemitteln, bevorzugt auf wässrigen Lösemitteln basieren.

Weitere vorteilhafte Ausführungen der Erfindung sind in den Unteransprüchen angegeben.

### Beschreibung der Erfindung

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Numerische Bereiche, die in dem Format "von x bis y" angegeben sind, schließen die genannten Werte ein sowie die Werte, die im Bereich der dem Fachmann bekannten jeweiligen Messgenauigkeit liegen. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Alle Prozentangaben, die im Zusammenhang mit den hierin beschriebenen Zusammensetzungen gemacht werden, beziehen sich, sofern nicht explizit anders angegeben, auf Gew.-%, jeweils bezogen auf die betreffende Mischung bzw. Zusammensetzung.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. Zusammen mit Gewichtsangaben bezieht sich die Angabe auf alle Verbindungen der angegebenen Art, die in der Zusammensetzung/Mischung enthalten sind, d.h., dass die Zusammensetzung über die angegebene Menge der entsprechenden Verbindungen hinaus keine weiteren Verbindungen dieser Art enthält.

"Oberflächenfunktionalisierung", wie hierin verwendet, bezieht sich auf das in-Kontakt-Bringen des Pigments, welches optional vor der Oberflächenfunktionalisierung mit weiteren Substanzen behandelt wurde, mit dem erfindungsgemäßen Additiv, so dass zumindest ein Teil des Additives auf der Oberfläche des Pigments anhaftet und somit zumindest ein Teil der Pigmentoberfläche bedeckt ist.

"Nicht-oberflächenfunktionalisiertes Pigment", wie hierin verwendet, richtet sich auf das Pigment, welches nicht mit dem erfindungsgemäßen Additiv oberflächenfunktionalisiert wurde.

Gegenstand der Erfindung ist ein leicht dispergierbares Pigment, das dadurch gekennzeichnet ist, dass es mit 0,1 bis 10 Gew.-% eines Additivs auf Basis eines Bisphosphonat oder eines Salzes davon bezogen auf das Gewicht des nicht-oberflächenfunktionalisiertem Pigments oberflächenfunktionalisiert ist. Vorzugsweise wurde das Pigment mit 3 bis 8 Gew.-% des Additives oberflächenfunktionalisiert. Das Pigment kann auch mit 4 bis 7 Gew.-% oder 5 Gew.-% des hierin offenbarten Additives bezogen auf das Gewicht des nicht-oberflächenfunktionalisiertem Pigments oberflächenfunktionalisiert sein.

Als Pigment ist jedes im Stand der Technik bekannte und für den erfindungsgemäßen Zweck geeignete Pigment einsetzbar. Gemäß der Erfindung kann es sich bei dem Pigment um ein organisches oder ein anorganisches Pigment handeln. Es können auch Mischungen verschiedener organischer Pigmente oder verschiedener anorganischer Pigmente oder auch Mischungen von organischen und anorganischen Pigmenten verwendet werden.

Bei den organischen Pigmenten handelt es sich üblicherweise um organische Bunt-, Weiß-und Schwarzpigmente. Anorganische Pigmente können ebenfalls Farbpigmente, Weißpigmente sowie Glanzpigmente und die üblicherweise als Füllstoffe eingesetzten anorganischen Pigmente sein.

Geeignete organische Pigmente sind, ohne auf diese beschränkt zu sein, Monoazopigmente, wie C.I. Pigment Brown 25; C.I. Pigment Orange 5, 13, 36, 38, 64 und 67; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 101:1, 208, 210, 245, 247 und 251; C.I. Pigment Yellow 1, 3, 62, 65, 73, 74, 97, 120, 151, 154, 168, 181, 183 und 191; C.I. Pigmente Violet 32; Disazopigmente, wie C.I. Pigment Orange 16, 34, 44 und 72; C.I. Pigment Yellow 12, 13, 14, 16, 17, 81, 83, 106. 113, 126, 127, 155, 174, 176 und 188; Disazokondensationspigmente, wie C.I. Pigment Yellow 93, 95 und 128; C.I. Pigment Red 144, 166, 214, 220, 221, 242 und 262; C.I. Pigment Brown 23 und 41, Anthanthronpigmente, wie C.I. Pigment Red 168; Anthrachinonpigmente, wie C.I. Pigment Yellow 147, 177 und 199; C.I. Pigment Violet 31; Anthrapyrimidinpigmente, wie C.I. Pigment Yellow 108; Chinacridonpigmente, wie C.I. Pigment Orange 48 und 49; C.I. Pigment Red 122, 202, 206 und 209; C.I. Pigment Violet 19; Chinophthalonpigmente, wie C.I. Pigment Yellow 138; Diketopyrrolopyrrolpigmente, wie C.I. Pigment Orange 71, 73 und 81; C.I. Pigment Red 254, 255, 264, 270 und 272; Dioxazinpigmente, wie C.I. Pigment Violet 23 und 37; C.I. Pigment Blue 80; Flavanthronpigmente, wie C.I. Pigment Yellow 24; Indanthronpigmente, wie C.I. Pigment Blue 60 und 64; Isoindolinpigmente, wie C.I. Pigmente Orange 61 und 69; C.I. Pigment Red 260; C.I. Pigment Yellow 139 und 185; Isoindolinonpigmente, wie C.I. Pigment Yellow 109, 110 und 173; Isoviolanthronpigmente, wie C.I. Pigment Violet 31; Metallkomplexpigmente, wie C.I. Pigment Red 257; C.I. Pigment Yellow 117, 129, 150, 153 und 177; C.I. Pigment Green 8; Perinonpigmente, wie C.I. Pigment Orange 43; C.I. Pigment Red 194; Perylenpigmente, wie C.I. Pigment Black 31 und 32; C.I. Pigment Red 123, 149, 178, 179, 190 und 224; C.I. Pigment Violet 29; Phthalocyaninpigmente, wie C.I. Pigment Blue 15, 15:1, 15:2,15:3, 15:4, 15:6 und 16; C.I. Pigment Green 7 und 36; Pyranthronpigmente, wie C.I. Pigment Orange 51; C.I. Pigment Red 216; Pyrazolochinazolonpigmente, wie C.I. Pigment Orange 67; C.I. Pigment Red 251; Thioindigopigmente, wie C.I. Pigment Red 88 und 181; C.I. Pigment Violet 38; Triarylcarboniumpigmente, wie C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz); C.I. Pigment Yellow 101 (Aldazingelb); und C.I. Pigment Brown 22.

Geeignete anorganische Pigmente sind, ohne auf diese beschränkt zu sein, Weißpigmente, wie Titandioxid (C.I. Pigment White 6), Zinkweiß, Farbenzinkoxid; Zinksulfid, Lithopone; Schwarzpigmente, wie Eisenoxidschwarz (C.I. Pigment Black 11), Eisen-Mangan-Schwarz, Spinell-schwarz (C.I. Pigment Black 27); Ruß (C.I. Pigment Black 7); Buntpigmente, wie Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau; Ultramarinviolett; Kobalt- und Manganviolett; Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot; Eisenoxidbraun (C.I. Pigment Brown 6 und 7), Mischbraun, Spinell- und Korundphasen (C.I. Pigment Brown, 29,31, 33,34, 35,37, 39 und 40), Chromtitangelb (C.I. Pigment Brown 24), Chromorange; Cersulfid (C.I. Pigment Orange 75); Eisenoxidgelb (C.I. Pigment Yellow 42); Nickeltitangelb (C.I. Pigment Yellow 53 ; C.I. Pigment Yellow 157,158, 159,160, 161,162, 163,164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34) sowie Bismutvanadat (C.I. Pigment Yellow 184).

Ferner können ebenfalls anorganische Pigmente eingesetzt werden, die herkömmlicherweise als Füllstoffe eingesetzt werden, wie transparentes Siliciumdioxid, Quarzmehl, Aluminiumoxid, Aluminiumhydroxid, Zinksulfid, natürliche Glimmer, natürliche und gefällte Kreide und Bariumsulfat.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist, wie beispielsweise Aluminiumplättchen und ein- oder mehrfach, insbesondere mit Metalloxiden beschichtete Aluminium-, Eisenoxid- und Glimmerplättchen.

Die hierin beschriebenen Pigmente liegen feinteilig vor und weisen eine mittlere Teilchengröße von 0,1 µm bis 5 µm auf.

In einer bevorzugten Ausführungsform der vorliegenden Erfindung ist das Pigment ausgewählt aus der Gruppe bestehend aus Magnesiumcarbonat, Calciumcarbonat, Bariumsulfat, Titandioxid, Zinkoxid, Zinksulfid, Huntit, Bleiweiß, Lithopone, Cristobalit, Kaolin, und Mischungen davon. Besonders bevorzugt ist das Pigment ausgewählt aus der Gruppe bestehend aus Calciumcarbonat, Titandioxid, Cristabolit, und am bevorzugtesten ist das Pigment Titandioxid. Titandioxid kann hierbei in den Kristallstrukturen Rutil, Anatas oder Brookit vorliegen, üblicherweise und je nach Anwendung und Zweck des erfindungsgemäßen Pigments in der Kristallstruktur Rutil oder Anatas.

Die Einstellung der Teilchengröße kann mittels etablierter Verfahren, wie beispielsweise Mahlung, oder mittels Wahl bestimmter Bedingungen während der Pigmentherstellung erfolgen.

Im Allgemeinen kann es sich bei dem Pigment um ein unbehandeltes oder um ein nachbehandeltes Pigment handeln. "Nachbehandelt" bzw. "Nachbehandlung", wie hierin verwendet, bezieht sich auf mindestens einen weiteren Verfahrensschritt, der nach der Herstellung des Pigments bzw. des Rohpigments durchgeführt wird. Solche Verfahrensschritte sind im Stand der Technik wohl etabliert. Hierzu gehören beispielsweise das Sandmahlen, Aufbringen von Schichten auf das Pigment bzw. das Rohpigment, Waschen, Trocknen, Dampfmahlen oder Kombinationen dieser Schritte. Bei einer herkömmlichen Nachbehandlung wird das Rohpigment zunächst einer Sandmahlung, einer optionalen anorganischen Modifikation mit Siliciumdioxid und Aluminiumoxid, einer Waschung, einer Trocknung und schließlich einer Dampfmahlung unterzogen. Die Nachbehandlung dient der Verbesserung der physikalischen, insbesondere der optischen, und chemischen Eigenschaften des Pigments und kann der jeweiligen spezifischen Verwendung des fertigen Pigments angepasst werden. Nachbehandelte Pigmente werden im Stand der Technik auch als gefinishte Pigmente bezeichnet.

Des Weiteren kann das Pigment anorganisch und/oder organisch nachbehandelt sein. Hierbei wird das Pigment mit anorganischen bzw. organischen Substanzen in Kontakt gebracht. Solche Substanzen und Techniken sind im Stand der Technik etabliert. Zu den anorganischen Substanzen zählen unter anderem Siliciumdioxid und Aluminiumoxid. In einer bevorzugten Ausführungsform ist das Pigment anorganisch nachbehandelt.

Wie bereits erwähnt, ist das Pigment vorzugsweise Titandioxid. In einer bevorzugten Ausführungsform ist das Titandioxid mit Siliciumdioxid und/oder mit Aluminiumoxid nachbehandelt. So kann das Titandioxid zunächst mit Siliciumdioxid und anschließend mit Aluminiumoxid nachbehandelt sein. Diese Nachbehandlung sowie Substanzen und Techniken, die hierfür verwendet werden, sind im Stand der Technik wohl bekannt.

Gemäß der Erfindung ist das Pigment mit einem Additiv auf Basis eines Bisphosphonats oder eines Salzes davon oberflächenfunktionalisiert. "Bisphosphonat", wie hierin verwendet, bezieht sich auf die allgemeingültige Definition dieser Verbindung und ist eine Verbindung, die zwei Phosphonatgruppen oder Ester der Phosphonatgruppen aufweisen. Vorzugsweise ist das Additiv eine Verbindung der Formel (I) oder eines Salzes davon

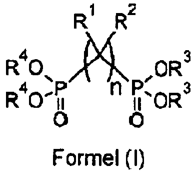

In Formel (I) ist n eine ganze Zahl von 1 bis 6. Des Weiteren sind R¹ und R² unabhängig voneinander Wasserstoff, Halogen, -OH, -SH, -SO₃H, -NH₂, -NO₂, lineares oder verzweigtes, substituiertes oder unsubstituiertes Alkyl mit 1 bis 20 Kohlenstoffatomen, lineares oder verzweigtes, substituiertes oder unsubstituiertes Alkenyl mit 3 bis 20 Kohlenstoffatomen, lineares oder verzweigtes, substituiertes oder unsubstituiertes Alkoxy mit 1 bis 20 Kohlenstoffatomen, substituiertes oder unsubstituiertes Cycloalkyl mit 5 bis 20 Kohlenstoffatomen, substituiertes oder unsubstituiertes Aryl mit 5 bis 20 Kohlenstoffatomen oder substituiertes oder unsubstituiertes Heteroaryl mit 5 bis 20 Kohlenstoffatomen, und R³ und R⁴ unabhängig voneinander Wasserstoff oder lineares oder verzweigtes, substituiertes oder unsubstituiertes Alkyl mit 1 bis 20 Kohlenstoffatomen. Bevorzugt ist n eine ganze Zahl von 1 bis 3 und am bevorzugtesten 1. Vorzugsweise ist R¹ ausgewählt aus der Gruppe bestehend aus -OH, -SH, -SO₃H, -NH₂, -NO₂. Besonders bevorzugt ist R¹ -OH oder -NH₂ und am bevorzugtesten -OH. Des Weiteren ist R² besonders bevorzugt ausgewählt aus der Gruppe bestehend aus -OH und linearem, substituierten oder unsubstituierten Alkyl mit 1 bis 10 Kohlenstoffatomen, weiter bevorzugt linearem, substituierten oder unsubstituierten Alkyl mit 1 bis 5 Kohlenstoffatomen, wie Ethyl, *n*-Propyl, *i*-Propyl, n-Butyl, s-Butyl, *t*-Butyl, und am bevorzugtesten ist R² Methyl. Ferner sind R³ und R⁴ am bevorzugtesten Wasserstoff. Falls R² lineares, substituiertes Alkyl mit 1 bis 10 Kohlenstoffatomen, vorzugsweise mit 1 bis 5 Kohlenstoffatomen ist, so ist es vorzugsweise mit einem 2-Methyl-Pyridin-Rest substituiert.

"Halogen", wie hierin verwendet, bezieht sich auf Fluor, Chlor, Brom und Iod.

Es können auch Salze des erfindungsgemäßen Additives eingesetzt werden. Hierbei kann eine oder beide Phosphonatgruppen teilweise oder vollständig deprotoniert vorliegen. Als Kation kann jedes im Stand der Technik bekannte und für den erfindungsgemäßen Zweck geeignete Kation verwendet werden. Vorzugsweise ist das Kation ausgewählt aus der Gruppe bestehend aus Natrium-, Kalium-, Magnesium-, Calcium-Kationen und Mischungen davon. Bevorzugt wird das Natrium-Kation eingesetzt.

In einer weiteren bevorzugten Ausführungsform der vorliegenden Erfindung ist das Additiv ausgewählt aus der Gruppe bestehend aus Etidronsäure, eines Salzes der Etidronsäure, 1-Hydroxy-2-(2-Pyridyl)ethyliden-bis-Phosphonsäure, eines Salzes der 1-Hydroxy-2-(2-Pyridyl)ethyliden-bis-Phosphonsäure und Mischungen davon. Am bevorzugtesten ist das Additiv Etidronsäure.

1-Hydroxy-2-(2-Pyridyl)ethyliden-bis-Phosphonsäure ist auch unter dem Namen [2-(3-Pyridinyl)ethylidene-1,1]bis(Phosphonsäure) bekannt.

Erfindungsgemäß wird das nicht-oberflächenfunktionalisierte Pigment mit 0,1 bis 10 Gew.-%, bevorzugt mit 3 bis 8 Gew.-% Additiv oberflächenfunktionalisiert bezogen auf das Gewicht des nicht-oberflächenfunktionalisierten Pigments. Das Pigment kann auch mit 4 bis 7 Gew.-% oder 5 Gew.-% des hierin offenbarten Additives bezogen auf das Gewicht des nicht-oberflächenfunktionalisierten Pigments oberflächenfunktionalisiert werden.

Durch die Oberflächenfunktionalisierung haftet das erfindungsgemäße Additiv auf dem Pigment, so dass die Oberfläche des Pigments teilweise oder vollständig bedeckt ist. Der Grad der Oberflächenbedeckung kann der späteren Verwendung des erfindungsgemäßen Pigments in Abhängigkeit der jeweiligen Zusammensetzung, in die das erfindungsgemäße Pigment eingearbeitet wird, angepasst werden. Das erfindungsgemäße Pigment weist eine derart funktionalisierte Oberfläche auf, die sowohl eine sehr gute Benetzung des Pigments mit polaren Lösungsmitteln, wie beispielsweise Wasser, als auch eine Stabilisierung des Pigments in dem Lösungsmittel bzw. in der Zusammensetzung verwirklicht. Die sehr gute Benetzbarkeit unterstützt die Dispergierbarkeit des Pigments in der Zusammensetzung und die Stabilisierung verhindert die Reagglomeration bzw. Sedimentation des Pigments in der Zusammensetzung. Auf diese Weise wird ein Pigment erhalten, dass sich aufgrund seiner Oberflächeneigenschaften ohne zusätzlichen intensiven Dispergierungsschritt leicht in einem wässrigen Medium dispergieren lasst und darüber hinaus universell ohne Einschränkung in eine Vielzahl von Farb- und Lackzusammensetzungen mit unterschiedlichen Anforderungen und Eigenschaften einarbeiten lässt. Ferner weist das hierin beschriebene Pigment hervorragenden Glanz, Deckkraft sowie Aufhellvermögen bzw. Färbekraft auf.

Ein weiterer Gegenstand der Erfindung ist ein Verfahren zur Herstellung eines leicht dispergierbaren Pigments, welches dadurch gekennzeichnet ist, dass das Verfahren die Oberflächenfunktionalisierung eines Pigments mit 0,1 bis 10 Gew.-%, bevorzugt 3 bis 8 Gew.-% eines Additivs auf Basis eines Bisphosphonats oder eines Salzes davon bezogen auf das Gewicht des nicht-oberflächenfunktionalisierten Pigments umfasst.

Die Oberflächenfunktionalisierung kann durch in-Kontakt-Bringen des Additivs mit dem Pigment erfolgen. Hierfür können alle im Stand der Technik bekannten Techniken und Verfahren verwendet werden, unter anderem das Eintauchen, Besprühen, Beschichten oder Benetzen der Oberfläche des nicht-oberflächenfunktioalisierten Pigments. Vorzugsweise erfolgt das in-Kontakt-Bringen durch Vereinigen einer Suspension, vorzugsweise einer wässrigen Suspension, die das nicht-oberflächenfunktionalisierte Pigment enthält, und einer Lösung, vorzugsweise einer wässrigen Lösung, die das Additiv enthält. Optional kann die das nicht-oberflächenfunktionalisierte Pigment enthaltende Suspension einen alkalischen pH-Wert aufweisen, beispielsweise zwischen 7,5 und 11. Vorzugsweise liegt der pH-Wert bei 8,5. Das in-Kontakt-Bringen kann bei einer Temperatur von 10 bis 90 °C, vorzugsweise von 30 bis 80 °C, besonders bevorzugt von 50 bis 80°C und am bevorzugtesten bei 60 °C erfolgen. Das Rühren erfolgt bei einer Geschwindigkeit von 500 bis 10000 rpm, 1000 bis 5000 rpm und am bevorzugtesten bei 2000 rpm für 1 bis 120 min, vorzugsweise für 3 bis 60 min, noch bevorzugter für 5 bis 30 min und am bevorzugtesten für 15 min. Vorzugsweise wird die das Pigment enthaltende Suspension bei 2500 rpm gerührt, die das Additiv enthaltende Lösung bei dieser Rührgeschwindigkeit zu der Suspension gegeben und nach der erfolgten Zugabe die Rührgeschwindigkeit auf 1300 rpm eingestellt.

Ferner kann das in-Kontakt-Bringen während der Nachbehandlung oder nach der Nachbehandlung erfolgen. Während der Nachbehandlung kann das Additiv in einem Mahlschritt, wie der Dampfstrahlmahlung und/oder der Sandmahlung, insbesondere der Kreislaufmahlung, zum Pigment gegeben werden und das Pigment so mit dem Additiv oberflächenfunktionalisiert werden. Anschließend kann ein Wasch-, Mahl- und/oder ein Sprühtrocknungsschritt erfolgen. Vorzugsweise erfolgt das in-Kontakt-Bringen während der Nachbehandlung. Wie bereits erwähnt, wird bei einer herkömmlichen Nachbehandlung das Rohpigment zunächst einer Sandmahlung, einer optionalen anorganischen Modifikation mit Siliciumdioxid und Aluminiumoxid, einer Waschung, einer Trocknung und dann einer Dampfmahlung unterworfen. Hierbei kann das erfindungsgemäße Additiv mit dem nicht-oberflächenfunktionalisiertem Pigment unmittelbar vor oder unmittelbar nach der Waschung sowie unmittelbar vor der Dampfmahlung in-Kontakt-gebracht werden.

Vorzugsweise ist das Additiv eine Verbindung der Formel (I) oder ausgewählt aus der Gruppe bestehend aus Etidronsäure, eines Salzes der Etidronsäure, 1-Hydroxy-2-(2-Pyridyl)ethyliden-bis-Phosphonsäure, eines Salzes der 1-Hydroxy-2-(2-Pyridyl)ethyliden-bis-Phosphonsäure und Mischungen davon und bevorzugt Etidronsäure ist.

Des Weiteren ist das Pigment vorzugsweise ausgewählt aus der Gruppe bestehend aus Magnesiumcarbonat, Calciumcarbonat, Bariumsulfat, Titandioxid, Zinkoxid, Zinksulfid, Huntit, Bleiweiß, Lithopone, Cristobalit, Kaolin, und Mischungen davon. Besonders bevorzugt ist das Pigment Calciumcarbonat, Titandioxid, Cristabolit und am bevorzugtesten Titandioxid.

Ein anderer Gegenstand der Erfindung ist eine Zusammensetzung, bevorzugt eine Beschichtungszusammensetzung, die auf polaren Lösemitteln, besonders bevorzugt auf wässrigen Lösemitteln basiert, welche dadurch gekennzeichnet ist, dass die Zusammensetzung mindestens ein leicht dispergierbares Pigment, wie hierin beschrieben, umfasst. Solche Zusammensetzungen können alle im Stand der Technik bekannten Zusammensetzungen sein, in die Pigmente üblicherweise eingearbeitet werden. Diese können, ohne auf diese beschränkt zu sein, Farben für den Innen- und Außenbereich, Lacke, Laminate und Kunststoffe sein. Die Zusammensetzungen können weitere herkömmliche Bestandteile umfassen, wie Netz- und Dispergiermittel, die die Eigenschaften des erfindungsgemäßen Additivs unterstützen, Bindemittel, Entschäumer, Stabilisatoren, Füllstoffe und Rheologieeinsteller. Als polares Lösemittel kann jedes im Stand der Technik bekannte und für den erfindungsgemäßen Zweck geeignete polare Lösemittel eingesetzt werden. Diese Lösemittel, ohne auf diese beschränkt zu sein, sind Wasser, Methanol, Ethanol, Isopropanol, Aceton, Ethylacetat, Essigsäure, Toluol sowie Mischungen davon. "Basierend", wie hierin verwendet, bedeutet, dass dieses Lösemittel den größten Gewichtsanteil aller in der Zusammensetzung enthaltender Lösemitteln darstellt. In einer bevorzugten Ausführungsform ist die Beschichtungszusammensetzung eine wässrige Beschichtungszusammensetzung. "Wässrig", wie hierin verwendet, bezieht sich auf eine Zusammensetzung bzw. auf eine Beschichtungszusammensetzung, die mindestens 5 Gew.-%, bevorzugt mindestens 10 Gew.-% und besonders bevorzugt mindestens 15 Gew.-% Wasser enthält.

Schließlich ist ein weiterer Gegenstand der Erfindung die Verwendung des erfindungsgemäßen Pigments zur Farbgebung von Zusammensetzungen, bevorzugt von Beschichtungszusammensetzungen, die auf polaren Lösemitteln, bevorzugt auf wässrigen Lösemitteln basieren. "Farbgebung", wie hierin verwendet, bedeutet, dass das Pigment der Zusammensetzung eine bestimmte Farbe verleiht. Hierzu zählt auch die Eigenschaft, eine Farbe einer Zusammensetzung aufzuhellen. Zu diesen Farben gehören auch Schwarz und Weiß.

### Beispiele

### Beispiel 1

Es wurde eine wässrige Suspension mit Titandioxidpigment, das mit Hilfe des Chloridverfahrens erhalten wurde, in einer Konzentration von 500 g TiO₂ / L hergestellt, und mit NaOH auf einen pH-Wert von 8,5 eingestellt. Die Suspension wurde anschließend in einem Dispergierapparat (ShearMaster der Fa. Netzsch) bei 2500 rpm mit der wässrigen Lösung der Etidronsäure, kommerziell erhältlich als Cublen K60 von Zschimmer & Schwarz Incorporated, vermischt und 15 Minuten bei 1300 rpm gerührt, wobei die Einwaage der Etidronsäure in 3 parallelen Ansätzen 1, 3 bzw. 5 Gew.-% bezogen auf Titandioxid betrug. Nachfolgend wurde die Suspension in einer Sandmühle (Labstar mit LME-Design der Fa. Netzsch) in Kreislauffahrweise mit 50 L/h und 10 Kreisen deagglomeriert, anschließend filtriert und der Filterkuchen bei 160 °C getrocknet. Das getrocknete Material wurde in einer Siebmühle zerkleinert und anschließend in einer Dampfstrahlmühle gemahlen.

100 mg des so erhaltenen Pigments wurden in 250 ml Wasser gegeben und mit einem Glasstab kurz umgerührt. Es war mit bloßem Auge zu erkennen, dass das Wasser stark getrübt und das Pigment vollständig ohne Bildung eines Bodensatzes dispergiert war. Nach 15 min blieb die Lösung weiterhin trüb.

Als Vergleichsversuch wurden 100 mg des Titandioxid-Pigments KRONOS 2310, das nicht erfindungsgemäß oberflächenfunktionalisiert und gemäß der Spezifikation mit Siliciumdioxid und Aluminiumoxid beschichtet ist, in 250 ml Wasser gegeben und mit einem Glasstab kurz umgerührt. Es war mit bloßem Auge zu erkennen, dass das Wasser klar blieb und nur kleine Mengen des Pigments dispergierten. Trotz Umrührens bildete sich unverzüglich ein großer Bodensatz aus. Nach 15 min war die Lösung vollständig klar ohne jegliche Trübung.

## Patentansprüche

1. Leicht dispergierbares Pigment **dadurch gekennzeichnet, dass** das Pigment mit 0,1 bis 10 Gew.-%, bevorzugt 3 bis 8 Gew.-% eines Additivs auf Basis eines Bisphosphonats oder eines Salzes davon bezogen auf das Gewicht des nicht-oberflächenfunktionalisiertem Pigments oberflachenfunktionalisiert ist.

2. Pigment nach Anspruch 1, **dadurch gekennzeichnet, dass** das Pigment ein anorganisches oder ein organisches Pigment ist.

3. Pigment nach Anspruch 2, **dadurch gekennzeichnet, dass** das anorganische Pigment ausgewählt ist aus der Gruppe bestehend aus Magnesiumcarbonat, Calciumcarbonat, Bariumsulfat, Titandioxid, Zinkoxid, Zinksulfid, Huntit, Bleiweiß, Lithopone, Cristobalit, Kaolin und Mischungen davon.

4. Pigment nach Anspruch 2 oder 3, **dadurch gekennzeichnet, dass** das anorganische Pigment ausgewählt ist aus der Gruppe bestehend aus Calciumcarbonat, Titandioxid, Cristabolit und Mischungen davon.

5. Pigment nach einem der Ansprüche 2 bis 4, **dadurch gekennzeichnet, dass** das anorganische Pigment Titandioxid ist.

6. Pigment nach einem der Ansprüche 2 bis 5 **dadurch gekennzeichnet, dass** das Pigment anorganisch nachbehandelt ist

7. Pigment nach Anspruch 6 **dadurch gekennzeichnet, dass** das Pigment Titandioxid ist und das Titandioxid mit Siliciumdioxid und/oder Aluminiumoxid anorganisch nachbehandelt wurde.

8. Pigment nach einem der Ansprüche 1 bis 7 **dadurch gekennzeichnet, dass** das Additiv eine Verbindung der Formel (I) oder eines Salzes davon ist 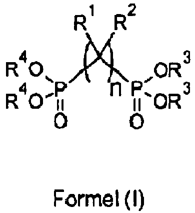 wobei
n eine ganze Zahl von 1 bis 6 ist,
R¹ und R² unabhängig voneinander Wasserstoff, Halogen, -OH, -SH, -SO₃H,-NH₂, -NO₂, lineares oder verzweigtes, substituiertes oder unsubstituiertes Alkyl mit 1 bis 20 Kohlenstoffatomen, lineares oder verzweigtes, substituiertes oder unsubstituiertes Alkenyl mit 3 bis 20 Kohlenstoffatomen, lineares oder verzweigtes, substituiertes oder unsubstituiertes Alkoxy mit 1 bis 20 Kohlenstoffatomen, substituiertes oder unsubstituiertes Cycloalkyl mit 5 bis 20 Kohlenstoffatomen, substituiertes oder unsubstituiertes Aryl mit 5 bis 20 Kohlenstoffatomen oder substituiertes oder unsubstituiertes Heteroaryl mit 5 bis 20 Kohlenstoffatomen sind, und
R³ und R⁴ unabhängig voneinander Wasserstoff oder lineares oder verzweigtes, substituiertes oder unsubstituiertes Alkyl mit 1 bis 20 Kohlenstoffatomen sind.

9. Pigment nach Anspruch 8 **dadurch gekennzeichnet, dass**
n eine ganze Zahl von 1 bis 3, bevorzugt 1 ist,
R¹ ausgewählt ist aus der Gruppe bestehend aus -OH, -SH, -SO₃H, -NH₂,-NO₂, bevorzugt -OH oder -NH₂ und besonders bevorzugt -OH ist,
R² ausgewählt ist aus der Gruppe bestehend aus -OH und linearem, unsubstituierten Alkyl mit 1 bis 10 Kohlenstoffatomen, bevorzugt lineares, unsubstituiertes Alkyl mit 1 bis 5 Kohlenstoffatomen und besonders bevorzugt Methyl ist, und
R³ und R⁴ Wasserstoff sind.

10. Pigment nach einem oder mehreren der Ansprüche 1 bis 9, **dadurch gekennzeichnet, dass**
das Additiv ausgewählt ist aus der Gruppe bestehend aus Etidronsäure, eines Salzes der Etidronsäure, 1-Hydroxy-2-(2-Pyridyl)ethyliden-bis-Phosphonsäure, eines Salzes der 1-Hydroxy-2-(2-Pyridyl)ethyliden-bis-Phosphonsäure und Mischungen davon und bevorzugt Etidronsäure ist.

11. Verfahren zur Herstellung eines leicht-dispergierbaren Pigments, **dadurch gekennzeichnet, dass**
das Verfahren die Oberflächenfunktionalisierung eines Pigments mit 0,1 bis 10 Gew.-%, bevorzugt 3 bis 8 Gew.-% eines Additivs auf Basis eines Bisphosphonats bezogen auf das Gewicht des nicht-oberflächenfunktionalisierten Pigments umfasst.

12. Verfahren nach Anspruch 11, **dadurch gekennzeichnet, dass**
das Additiv eine Verbindung der Formel (I) ist oder ausgewählt ist aus der Gruppe bestehend aus Etidronsäure, eines Salzes der Etidronsäure, 1-Hydroxy-2-(2-Pyridyl)ethyliden-bis-Phosphonsäure, eines Salzes der 1-Hydroxy-2-(2-Pyridyl)ethyliden-bis-Phosphonsäure und Mischungen davon und bevorzugt Etidronsäure ist.

13. Verfahren nach Anspruch 11 oder 12, **dadurch gekennzeichnet, dass**
das Pigment ausgewählt ist aus der Gruppe bestehend aus Magnesiumcarbonat, Calciumcarbonat, Bariumsulfat, Titandioxid, Zinkoxid, Zinksulfid, Huntit, Bleiweiß, Lithopone, Cristobalit, Kaolin und Mischungen davon, bevorzugt ausgewählt ist aus der Gruppe bestehend aus Calciumcarbonat, Titandioxid, Cristabolit und Mischungen davon und besonders bevorzugt Titandioxid ist.

14. Zusammensetzung, bevorzugt Beschichtungszusammensetzung, die auf polaren Lösemitteln, besonders bevorzugt auf wässrigen Lösemitteln basiert, **dadurch gekennzeichnet, dass**
die Zusammensetzung mindestens ein leicht dispergierbares Pigment nach einem der Ansprüche 1 bis 10 umfasst.

15. Verwendung des Pigments nach einem der Ansprüche 1 bis 10 zur Farbgebung von Zusammensetzungen, bevorzugt von Beschichtungszusammensetzungen, die auf polaren Lösemitteln, bevorzugt auf wässrigen Lösemitteln basieren.
